# FASCICULE DE BREVET EUROPEEN

(11) **EP 2 048 379 B1**
(45) Date de publication et mention de la délivrance du brevet: **01.02.2012**
(21) Numéro de dépôt: 08165052.5
(22) Date de dépôt: 25.09.2008
(51) Int. Cl.: F16B 5/12, B60J 10/00

(54) **Garniture pour glace, ouvrant équipé d'une telle garniture et procédé de positionnement associé**
Garnitur für Scheibe, Öffnungselement, das mit einer solchen Garnitur ausgestattet ist, und entsprechendes Einsetzverfahren
Window trim, door equipped with such a trim and associated positioning method

(30) Priorité: 12.10.2007 FR 0758265
(43) Date de publication de la demande: 15.04.2009
(73) Titulaire: Peugeot Citroën Automobiles SA, 78140 Vélizy-Villacoublay (FR)
(72) Inventeur: Simon, Guillaume, 66600 RIVESALTES (FR)

(56) Documents cités:
- WO-A-01/87657
- FR-A- 2 613 414

## Description

La présente invention concerne une garniture, un ouvrant équipé d'une telle garniture et un procédé de positionnement associé.

La présente invention concerne une garniture de glissement pour une glace équipant un ouvrant de véhicule, notamment un véhicule automobile, ladite garniture comprenant un joint d'étanchéité apte à glisser le long de la glace et une baguette longitudinale munie de moyens d'emboîtement et destinée à sa fixation sur l'ouvrant, la baguette comprenant à son extrémité arrière des moyens d'immobilisation sur l'ouvrant.

L'invention concerne également un ouvrant de véhicule ainsi qu'un procédé de positionnement de la garniture sur l'ouvrant.

Les panneaux de porte des véhicules automobiles comportent de manière classique, une glace montée à coulissement entre une position relevée d'obturation d'une ouverture ménagée dans le panneau de porte et une position escamotée dans ledit panneau de porte pour libérer l'ouverture.

Il est connu du document FR-A-2613414 l'assemblage d'une coulisse sur le bord vertical de l'ouverture formé par un panneau de portière, ladite coulisse délimitant une gorge dans laquelle est disposée une pièce d'insertion rendue solidaire du panneau de portière par l'intermédiaire de pattes de blocage dédiées.

Le bord inférieur de l'ouverture est équipé d'un lécheur de glace formé par une baguette longitudinale constituant un enjoliveur permettant de dissimuler la feuillure du panneau de porte.

A cet effet, la baguette est pourvue de moyens d'emboîtement sur la feuillure du panneau de porte et, à son extrémité arrière, de moyens d'immobilisation sur le montant latéral de ce panneau de porte.

Dans ce qui suit, la garniture de coulissement sera également qualifiée de lécheur de glace étant donné que l'étanchéité entre la glace et la porte sur laquelle la glace est montée à coulissement vertical est également réalisée au moyen de ladite garniture.

La garniture est un élément d'étanchéité, assimilable à un joint d'étanchéité, comportant une pièce d'aspect constituée de la baguette.

La baguette du lécheur de glace doit satisfaire à plusieurs contraintes, qui sont notamment :
- le montage sur le panneau de porte sans dégrader l'aspect de ce panneau de porte,
- la tenue de l'extrémité arrière sur le montant latéral du panneau de porte, et
- le respect du style du véhicule automobile.

Le montage de ce type de baguette s'effectue en introduisant les moyens d'immobilisation dans un orifice ménagé dans le montant latéral du panneau de porte, puis en faisant pivoter la baguette vers le bas de façon à l'emboîter sur la feuillure du panneau de porte.

Les moyens d'immobilisation sont le plus souvent constitués par un pion d'emboîtement dans un orifice qui présente une forme rectangulaire.

Ce genre de fixation a pour avantage de présenter une bonne tenue de la baguette sur le panneau de porte, mais il a pour inconvénient que son montage sur le panneau de porte est difficile du fait que lors de la rotation de la baguette, son extrémité arrière vient buter contre le panneau de porte.

Il en résulte donc une difficulté pour encliqueter le pion dans l'orifice qui peut entraîner une dégradation de la baguette due à sa flexion lors du montage.

L'invention a pour but de proposer une garniture de glissement qui permet, par des moyens simples, d'éviter ces inconvénients.

A cette fin, la garniture selon l'invention, par ailleurs conforme à la définition générique qu'en donne le préambule ci-dessus, est essentiellement caractérisé en ce que lesdits moyens d'immobilisation comprennent, d'une part, un organe d'indexage de la garniture par rapport à l'ouvrant, destiné au prépositionnement de la baguette sur l'ouvrant et à la rotation de la baguette autour d'un axe de rotation s'étendant perpendiculairement à ladite garniture et, d'autre part, au moins un organe de verrouillage de ladite baguette destiné à l'immobiliser à l'ouvrant par rapport à l'axe de rotation.

Selon d'autres caractéristiques de la garniture de l'invention :
- l'organe d'indexage comprend un fût cylindrique s'étendant perpendiculairement à la baguette ;
- ledit organe de verrouillage comprend au moins une languette élastique ménagée sur le fût, chaque languette comportant une première extrémité solidaire du fût et une seconde extrémité libre munie extérieurement d'un rebord en saillie, ledit rebord étant destiné à l'encliquetage de l'organe de verrouillage dans l'ouvrant ;
- la première extrémité de la languette est située entre l'extrémité libre du fût et la seconde extrémité de la languette ;
- l'organe d'indexage comprend une plaque sensiblement rectangulaire, s'étendant perpendiculairement à la baguette et comportant deux rebords latéraux formant des pans inclinés vers le bas ;
- ledit organe de verrouillage comprend au moins un patte élastique s'étendant au-dessous de la plaque perpendiculairement à la baguette, ladite patte comportant une première extrémité solidaire de ladite baguette et une seconde extrémité libre munie d'un rebord en saillie, ledit rebord étant destiné à l'encliquetage de l'organe de verrouillage dans l'ouvrant.

L'invention a également pour objet un ouvrant de véhicule, notamment de véhicule automobile, équipé d'une glace coulissante et d'une garniture comprenant l'une quelconque des caractéristiques susmentionnées, caractérisé en ce qu'il comprend un panneau de porte délimitant un montant latéral sur lequel est ménagé un orifice coopérant avec lesdits moyens d'immobilisation de la garniture sur l'ouvrant.

Selon d'autres caractéristiques de l'ouvrant de l'invention, l'orifice est formé par un trou circulaire ou par un trou rectangulaire.

L'invention a aussi pour objet un procédé de positionnement d'une garniture de glissement d'une glace sur un ouvrant d'un véhicule, l'ouvrant comprenant au moins l'une des caractéristiques susmentionnées, caractérisé en ce qu'il consiste en les étapes suivantes :
- on introduit l'organe d'indexage de la baguette dans l'orifice du montant latéral du panneau de porte,
- on fait pivoter la baguette autour de l'organe d'indexage pour l'emboîter sur la feuillure du panneau de porte, et
- on exerce une poussée sur l'extrémité arrière de la baguette dans une direction perpendiculaire à l'axe de la garniture pour fixer la baguette sur le panneau de porte par ledit organe de verrouillage dans l'orifice.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un panneau de porte comportant un lécheur extérieur de glace pourvu d'un dispositif de fixation sur le panneau de porte, conforme à l'invention,
- la Fig. 2 est une vue schématique partielle et en perspective du montant latéral du panneau de porte,
- la Fig. 3 est une vue schématique partielle et en perspective de la face interne du lécheur extérieur munie du dispositif de fixation conforme à l'invention, selon un premier mode de réalisation,
- la Fig. 4 est une vue schématique partielle et en perspective de la face interne du panneau de porte montrant la fixation du lécheur de glace, conforme à l'invention,
- la Fig. 5 est une vue schématique partielle et en perspective du montant latéral du panneau de porte,
- la Fig. 6 est une vue schématique partielle et en perspective de la face interne du lécheur extérieur équipé du dispositif de fixation conforme à l'invention, selon un second mode de réalisation,
- la Fig. 7 est une vue schématique et en perspective des moyens d'immobilisation du lécheur extérieur, selon le second mode de réalisation,
- les Figs. 8 et 9 sont des schémas montant la cinématique d'insertion de l'organe d'indexage dans l'orifice du montant latéral du panneau de porte, selon le second mode de réalisation, et
- la Fig. 10 est une vue partielle et schématique montrant la mise en place du lécheur extérieur sur le panneau de porte.

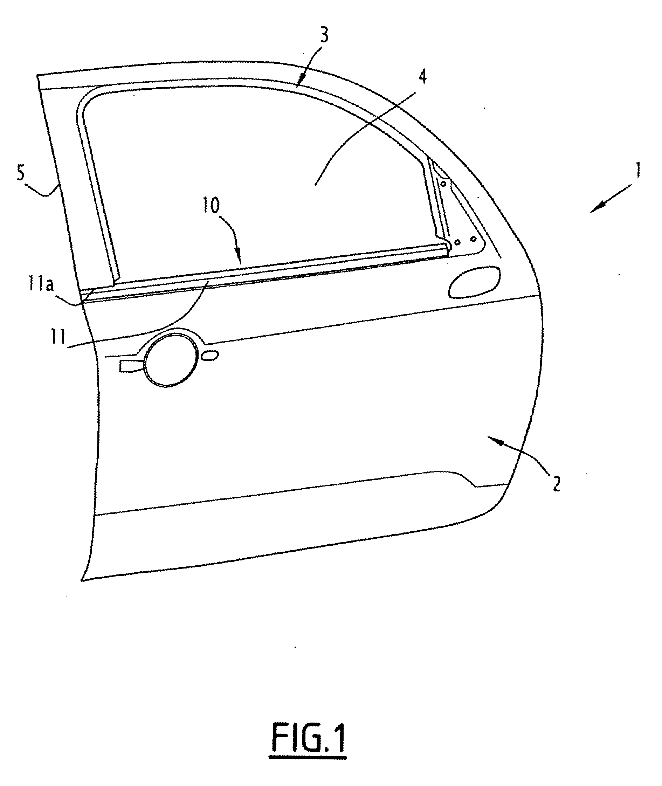

Sur la Fig. 1, on a représenté schématiquement un panneau de porte désigné dans son ensemble par la référence 1 et qui comporte, de manière classique, une partie inférieure pleine 2 et une partie supérieure 3 formant un cadre à l'intérieur duquel est ménagée une ouverture 4.

Le panneau de porte 1 est pourvu d'une glace, non représentée, montée à coulissement entre une position relevée d'obturation de l'ouverture 4 et une position escamotée dans la partie pleine 2 du panneau de porte 1, pour libérer l'ouverture 4.

Le cadre 3 comprend notamment un montant latéral arrière 5.

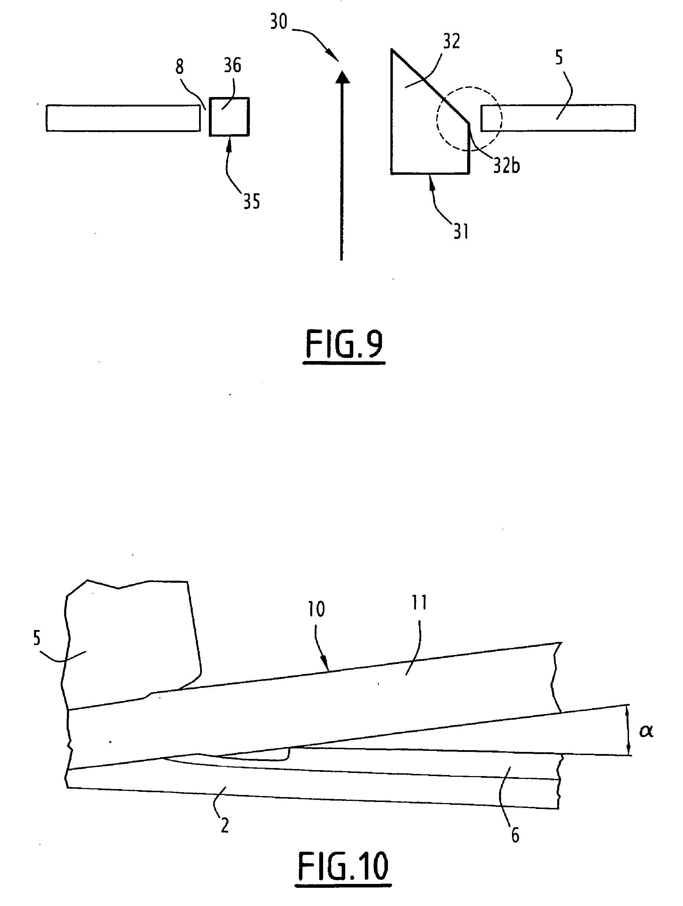

Le bord inférieur de l'ouverture 4 est équipé d'une garniture de coulissement lécheur de glace désignée par la référence générale 10 comportant une baguette longitudinale 11 constituant un enjoliveur permettant de dissimuler la feuillure 6 (Fig. 10) de la partie pleine 2 du panneau de porte 1.

De manière classique, la baguette 11 est munie de moyens d'emboîtement sur la feuillure 6 du panneau de porte 1 et, à son extrémité arrière 11a, de moyens d'immobilisation sur le montant latéral 5 de ce panneau de porte 1.

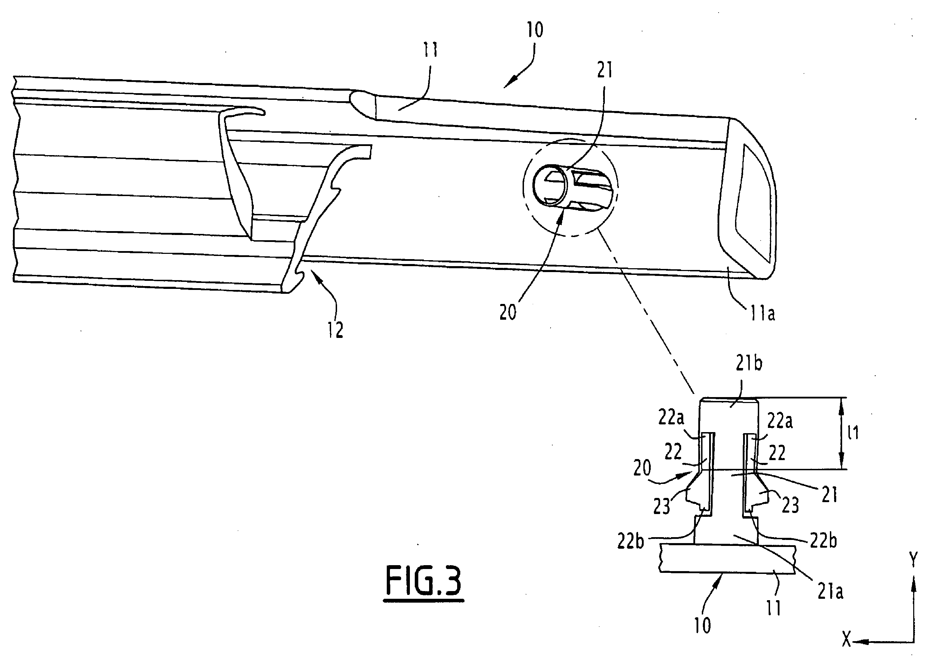

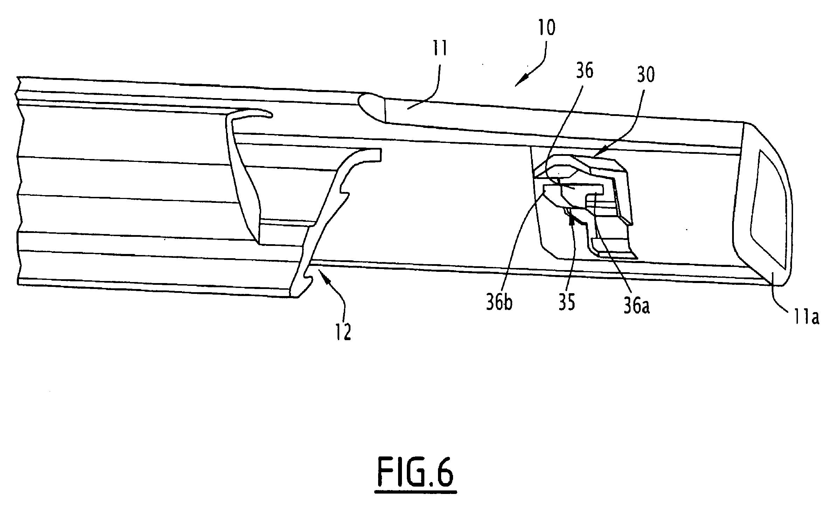

De façon connue, et comme représenté sur les Figs. 3 et 6, les moyens d'emboîtement sur la feuillure 6 sont formés par une gorge longitudinale 12 ménagée sur le bord inférieur de la baguette 11.

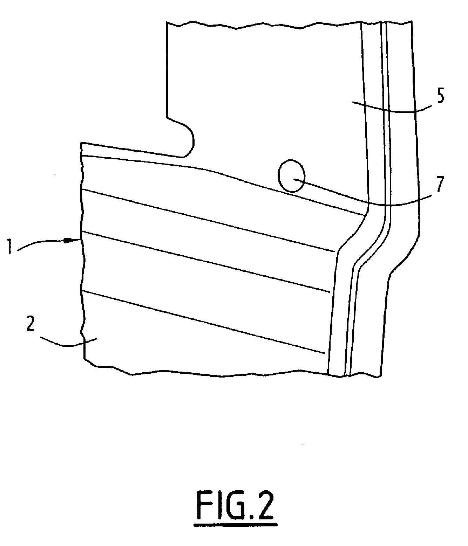

En se reportant maintenant aux Figs. 2 à 4, on va décrire un premier mode de réalisation des moyens d'immobilisation de l'extrémité arrière 11 a de la baguette 11 sur le montant latéral 5.

D'une manière générale, les moyens d'immobilisation de l'extrémité arrière 11a de la baguette 11 sur le montant latéral 5 comprennent un organe d'indexage 20 dans une orifice 7 ménagé dans ledit montant latéral 5 pour le positionnement de la baguette 11 selon un axe X parallèle à l'axe longitudinal du véhicule et permettant la rotation de cette baguette 11 autour d'un axe horizontal Y perpendiculaire audit axe longitudinal du véhicule.

Selon ce mode de réalisation, les moyens d'immobilisation comprennent un organe d'indexage formé par un fût cylindrique 20 ménagé sur la face interne de la baguette 11 et s'étendant perpendiculairement à ladite baguette, ainsi que montré à la Fig. 3.

Le fût 20 est formé par un corps 21 ayant une première extrémité 21 a solidaire de la baguette 11 et une seconde extrémité 21 b libre.

Ce fût 20 est destiné à coopérer, comme on le verra ultérieurement, avec l'orifice ménagé dans le montant latéral 5 et qui est formé par un trou 7 circulaire, comme montré à la Fig. 2.

Le corps 21 du fût cylindrique 20 comporte au moins un organe de verrouillage de la baguette 11 dans le trou 7. Dans ce mode de réalisation, ledit au moins organe de verrouillage comprend au moins deux languettes élastiques 22 ménagées sur le corps 21 dudit fût 20. Dans ce mode de réalisation, les languettes élastiques 22 sont au nombre de deux, diamétralement opposées sur le corps 21.

Chaque languette 22 comporte une première extrémité 22a solidaire du corps 21 du fût 20 et une seconde extrémité 22b libre munie extérieurement par un rebord 23 en saillie d'encliquetage dans le trou 7.

La partie séparant l'extrémité libre 21 b du corps 21 avec les rebords 23 d'encliquetage présente une longueur "11" qui détermine une zone de prépositionnement du fût 20 dans le trou 7 permettant un déplacement de ce fût 20 selon l'axe horizontal Y perpendiculaire à l'axe longitudinal du véhicule automobile.

De façon plus générale, la première extrémité 22a de chaque languette 22 est située entre l'extrémité libre 21 b du corps 21 du fût 20 et la seconde extrémité 22b de ladite languette 22.

Le montage du lécheur 10 sur le panneau de porte 1 s'effectue de la manière suivante.

Tout d'abord, un opérateur présente le corps 21 du fût 20 dans l'axe du trou 7 en positionnant la baguette 11 du lécheur 10 légèrement inclinée, comme montré à la Fig.10, avec un angle α minimum d'ouverture pour que la baguette 11 soit à la limite de l'emboîtement sur la feuillure 6 du panneau de porte 1. Ensuite, l'opérateur engage progressivement l'extrémité 21 b du corps 21 du fût 20 dans le trou 7 en maintenant la baguette 11 dans la position inclinée.

Dans cette position, la baguette 11 est extériorisée selon l'axe Y perpendiculaire à l'axe longitudinal du véhicule ce qui permet d'éviter que l'extrémité arrière 11 a entre en contact avec le panneau de porte 1.

Ensuite, l'opérateur fait pivoter la baguette 11 autour du corps 21 du fût 20 dans le trou 7 pour emboîter la gorge 12 sur la feuillure 6 du panneau de porte 1.

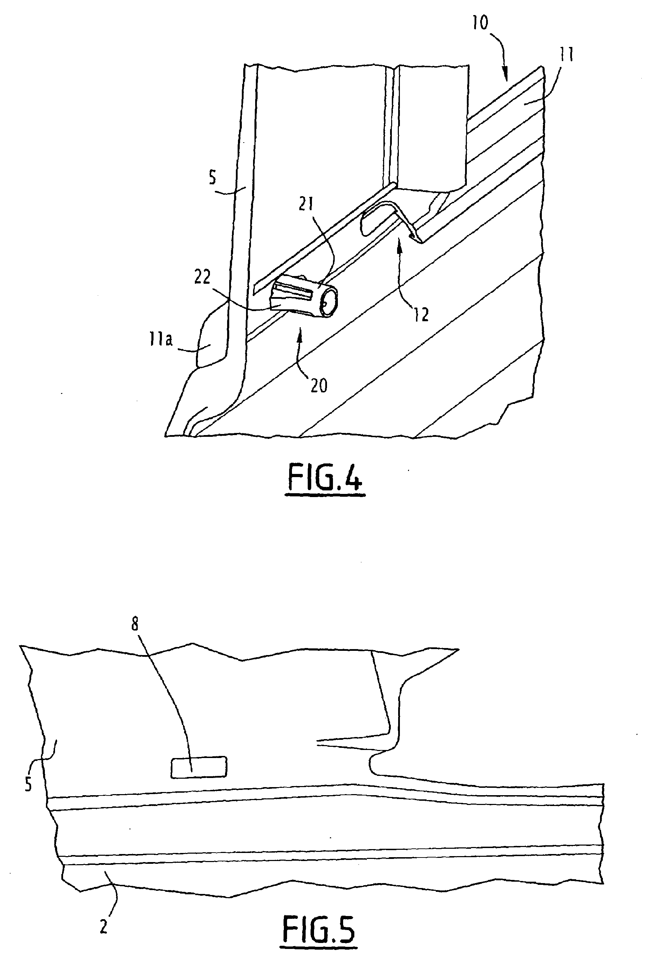

Au cours de cette manoeuvre, l'opérateur exerce une poussée progressive sur l'extrémité arrière 11a de la baguette 11 selon l'axe Y perpendiculaire à l'axe longitudinal du véhicule. Lors de cette poussée, les languettes élastiques 22 se rétractent progressivement et dès le passage des rebords 23 de ces languettes 22 dans le trou 7, ces languettes 22 reprennent leur position initiale et viennent en butée contre la face interne du montant latéral 5 du panneau de porte 1, ainsi que montré à la Fig. 4.

La baguette 11 du lécheur externe 10 est ainsi verrouillé sur le panneau de porte 1.

En se reportant maintenant aux Figs. 5 à 9, on va décrire un second mode de réalisation des moyens d'immobilisation de la baguette 11 du lécheur extérieur 10 sur le panneau de porte 1.

Dans ce mode de réalisation, les éléments communs au précédent mode de réalisation et notamment les éléments communs de la baguette 11, ont été désignés par les mêmes références.

Dans ce mode de réalisation et comme montré à la Fig. 5, l'orifice ménagé dans le montant latéral 5 du panneau de porte 1 est formé par un trou 8 rectangulaire. Les moyens d'immobilisation de l'extrémité arrière 11 a de la baguette 11 sur le panneau de porte 1 comprennent également un organe 30 d'indexage dans le trou 8 pour le positionnement de la baguette 11 selon un axe X parallèle à l'axe longitudinal du véhicule et permettant la rotation de cette baguette 11 autour d'un axe horizontal Y perpendiculaire audit axe longitudinal du véhicule.

Dans ce mode de réalisation, l'organe d'indexage 30 comprend une plaque 31 sensiblement rectangulaire s'étendant perpendiculairement à la baguette 11. Cette plaque 31 comporte une partie centrale 32 sensiblement horizontale dans la position de fixation de la baguette 11 sur le panneau de porte 1 et deux rebords latéraux 33 formant des pans inclinés vers le bas.

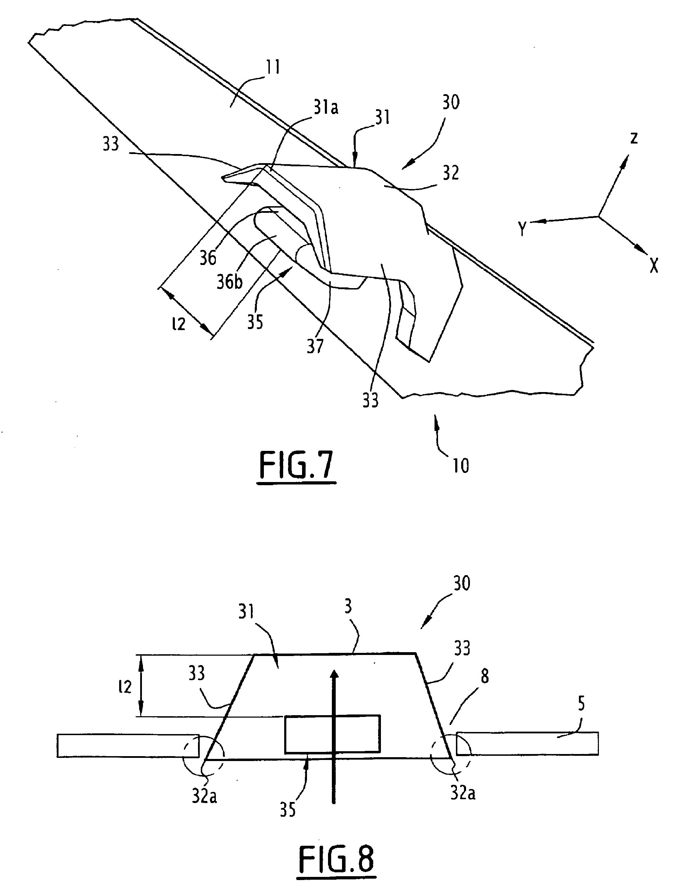

Les moyens d'immobilisation de la baguette 11 représentés sur les Figs. 6 et 7 comprennent également au moins un organe de verrouillage 35 de cette baguette 11 dans le trou 8 ménagé sur le montant latéral 5. Cet organe de verrouillage 35 comprend une patte élastique 36 s'étendant au-dessous de la plaque 31 perpendiculairement à la baguette 11.

La patte 36 comporte une première extrémité 36a (Fig. 6) solidaire de la baguette 11 et une seconde extrémité 36b libre munie d'un rebord 37 d'encliquetage dans le trou 7.

L'extrémité libre 36b est en retrait par rapport au rebord libre 31 a de la plaque 31 et la distance "12" entre ce rebord libre 31a et cette extrémité libre 36b forme une zone permettant de prépositionner la baguette 11 selon un axe X parallèle à l'axe longitudinal du véhicule, d'amorcer un contre appui selon un axe Z vertical au niveau de la patte élastique 36 et également d'avoir une latitude de déplacement selon un axe Y horizontal avant l'encliquetage de cette patte élastique 36 dans le trou 8.

En se reportant maintenant aux Figs.7 à 10, on va décrire le montage de la baguette 11 sur le panneau de porte 1.

Les Figures respectivement 8 et 9 représentent schématiquement la plaque 31 et la patte élastique 36, respectivement dans le plan XY et dans le plan YZ.

Tout d'abord, l'opérateur introduit le rebord libre 31a de la plaque 31 dans le trou 8 en maintenant la baguette 11 inclinée et écartée d'un angle α minium, comme montré à la Fig. 10 pour que cette baguette 11 soit à la limite de l'emboîtement de la gorge 12 sur la feuillure 6 du panneau de porte 1.

La baguette 11 ainsi prépositionnée est extériorisée selon l'axe Y ce qui permet d'éviter le contact selon l'axe Z entre l'extrémité arrière 11 a de la baguette 11 et le panneau de porte 1. Ce prépositionnement incliné de la baguette 11 est rendu possible grâce à la forme de la plaque 31 de l'organe d'indexage 30 et notamment grâce aux pans inclinés 33 de cette plaque 31.

Ensuite, l'opérateur fait pivoter la baguette 11 autour de l'organe d'indexage 30 de façon à emboîter la gorge 12 sur la feuillure 6 du panneau de porte 1 et il exerce une poussée sur l'extrémité arrière 11 a de la baguette 11 dans une direction Y perpendiculaire à l'axe longitudinal du véhicule pour fixer cette baguette 11 sur le panneau de porte 1.

Au cours de ce mouvement, le rebord 37 de la patte élastique 36 vient s'encliqueter dans le trou 8 du montant latéral 5 de façon à bloquer l'extrémité arrière 11a de la baguette 11.

Lors du positionnement de la plaque 31 de l'organe d'indexage 30, les bords d'extrémité latéraux 32a assurent avec les bords du trou 8, le centrage de l'organe d'indexage 30 selon l'axe X parallèle à l'axe longitudinal du véhicule (Fig. 8) et le bord supérieur 32b de la partie centrale 32 de la plaque 31 assure le centrage selon l'axe Z vertical (Fig. 9).

Le dispositif de fixation selon l'invention permet de pouvoir monter facilement le lécheur sur le panneau de porte sans dégrader son aspect, tout en assurant une bonne tenue de ce lécheur.

## Revendications

1. Garniture de glissement (10) pour une glace (4) équipant un ouvrant (1) de véhicule, notamment un véhicule automobile, ladite garniture (10) comprenant un joint d'étanchéité apte à glisser le long de la glace et une baguette (11) longitudinale munie de moyens (12) d'emboîtement et destinée à sa fixation sur l'ouvrant (1), la baguette (11) comprenant à son extrémité arrière (11a) des moyens (20, 22 ; 30, 35) d'immobilisation sur l'ouvrant (1), **caractérisé en ce que** lesdits moyens d'immobilisation comprennent, d'une part, un organe d'indexage (20 ; 30) de la garniture (10) par rapport à l'ouvrant, destiné au prépositionnement de la baguette (11) sur l'ouvrant et à la rotation de la baguette (11) autour d'un axe de rotation (Y) s'étendant perpendiculairement à ladite garniture et, d'autre part, au moins un organe de verrouillage (22 ; 35) de ladite baguette (11) destiné à l'immobiliser à l'ouvrant (1) par rapport à l'axe de rotation (Y).

2. Garniture selon la revendication 1, **caractérisée en ce que** l'organe d'indexage comprend un fût cylindrique (20) s'étendant perpendiculairement à la baguette (11).

3. Garniture selon la revendication 1 ou 2, **caractérisée en ce que** ledit organe de verrouillage comprend au moins une languette élastique (22) ménagée sur le fût (20), chaque languette (22) comportant une première extrémité (22a) solidaire du fût (20) et une seconde extrémité libre (22b) munie extérieurement d'un rebord (23) en saillie, ledit rebord étant destiné à l'encliquetage de l'organe de verrouillage dans l'ouvrant (1).

4. Garniture selon la revendication 3, **caractérisée en ce que** la première extrémité (22a) de la languette (22) est située entre l'extrémité libre (21 b) du fût (20) et la seconde extrémité (22b) de la languette (22).

5. Garniture selon la revendication 1, **caractérisée en ce que** l'organe d'indexage (30) comprend une plaque (31) sensiblement rectangulaire, s'étendant perpendiculairement à la baguette (11) et comportant deux rebords latéraux (33) formant des pans inclinés vers le bas.

6. Garniture selon la revendication 5, **caractérisée en ce que** ledit organe de verrouillage (35) comprend au moins un patte élastique (36) s'étendant au-dessous de la plaque (31) perpendiculairement à la baguette (11), ladite patte (36) comportant une première extrémité (36a) solidaire de ladite baguette (11) et une seconde extrémité libre (36b) munie d'un rebord en saillie (37), ledit rebord étant destiné à l'encliquetage de l'organe de verrouillage (35) dans l'ouvrant (1).

7. Ouvrant (1) de véhicule, notamment de véhicule automobile, équipé d'une glace (4) coulissante et d'une garniture (10) conforme à l'une quelconque des revendications précédentes, **caractérisé en ce qu'**il comprend un panneau de porte délimitant un montant latéral (5) sur lequel est ménagé un orifice (7, 8) coopérant avec lesdits moyens d'immobilisation de la garniture (10) sur l'ouvrant (1).

8. Ouvrant selon la revendication 7 et l'une quelconque des revendications 2 à 4, **caractérisé en ce que** l'orifice est formé par un trou circulaire (7).

9. Ouvrant selon la revendication 7 et la revendication 5 ou 6, **caractérisé en ce que** l'orifice est formé par un trou rectangulaire (8).

10. Procédé de positionnement d'une garniture (10) de glissement d'une glace (4) sur un ouvrant (1) d'un véhicule, l'ouvrant étant conforme à l'une quelconque des revendications 7 à 9, **caractérisé en ce qu'**il consiste en les étapes suivantes :
- on introduit l'organe d'indexage (20 ; 30) de la baguette (11) dans l'orifice (7 ; 8) du montant latéral (5) du panneau de porte (1),
- on fait pivoter la baguette (11) autour de l'organe d'indexage (20 ; 30) pour l'emboîter sur la feuillure (6) du panneau de porte (1), et
- on exerce une poussée sur l'extrémité arrière (11a) de la baguette (11) dans une direction perpendiculaire à l'axe de la garniture (10) pour fixer la baguette (11) sur le panneau de porte (1) par ledit organe de verrouillage (22 ; 30) dans l'orifice (7 ; 8).

## Claims

1. A sliding trim (10) for a window (4) equipping an opening panel (1) of a vehicle, in particular a motor vehicle, the said trim (10) comprising a tightness joint suited to slide along the window and a longitudinal moulding (11) provided with means (12) for fitting and intended for its fixing on the opening panel (1), the moulding (11) comprising at its rear end (11a) means (20, 22; 30, 35) for securing on the opening panel (1), **characterised in that** the said securing means comprise, on the one hand, an indexing member (20; 30) of the trim (10) with respect to the opening panel, intended for the pre-positioning of the moulding (11) on the opening panel and the rotation of the moulding (11) about a rotation axis (Y) extending perpendicularly to the said trim and, on the other hand, at least one locking member (22; 35) of the said moulding (11) intended to secure it to the opening panel (1) with respect to the rotation axis (Y).

2. The trim according to Claim 1, **characterized in that** the indexing member comprises a cylindrical shaft (20) extending perpendicularly to the moulding (11).

3. The trim according to Claim 1 or 2, **characterized in that** the said locking member comprises at least one elastic tongue (22) arranged on the shaft (20), each tongue (22) comprising a first end (22a) integral with the shaft (20) and a second free end (22b) provided externally with a projecting edge (23), the said edge being intended for the clicking of the locking member in the opening panel (1).

4. The trim according to Claim 3, **characterized in that** the first end (22a) of the tongue (22) is situated between the free end (21b) of the shaft (20) and the second end (22b) of the tongue (22).

5. The trim according to Claim 1, **characterized in that** the indexing member (30) comprises a substantially rectangular plate (31) extending perpendicularly to the moulding (11) and comprising two lateral edges (33) forming downwardly inclined faces.

6. The trim according to Claim 5, **characterized in that** the said locking member (35) comprises at least one elastic tab (36) extending beneath the plate (31) perpendicularly to the moulding (11), the said tab (36) comprising a first end (36a) integral with the said moulding (11) and a second free end (36b) provided with a projecting edge (37), the said edge being intended for the clicking of the locking member (35) in the opening panel (1).

7. An opening panel (1) of a vehicle, in particular of a motor vehicle, equipped with a sliding window (4) and with a trim (10) according to any one of the preceding claims, **characterized in that** it comprises a door panel delimiting a lateral pillar (5) on which an orifice (7, 8) is arranged, cooperating with the said securing means of the trim (10) on the opening panel (1).

8. The opening panel according to Claim 7 and any one of Claims 2 to 4, **characterized in that** the orifice is formed by a circular hole (7).

9. The opening panel according to Claim 7 and Claim 5 or 6, **characterized in that** the orifice is formed by a rectangular hole (8).

10. A method for positioning a sliding trim (10) of a window (4) on an opening panel (1) of a vehicle, the opening panel being in accordance with any one of Claims 7 to 9, **characterized in that** it consists of the following steps:
- the indexing member (20; 30) of the moulding (11) is introduced in the orifice (7; 8) of the lateral pillar (5) of the door panel (1),
- the moulding (11) is pivoted about the indexing member (20; 30) to fit it on the rabbet (6) of the door panel (1), and
- a pressure is exerted on the rear end (11a) of the moulding (11) in a direction perpendicular to the axis of the trim (10) to fix the moulding (11) on the door panel (1) by the said locking member (22; 30) in the orifice (7; 8).

## Patentansprüche

1. Gleitgarnitur (10) für eine Scheibe (4), die ein Fahrzeugöffnungselement (1), insbesondere ein Kraftfahrzeug ausstattet, wobei die Garnitur (10) eine Dichtung aufweist, die entlang der Scheibe gleiten kann, und eine Längsleiste (11), die mit Einrastmitteln (12) versehen und zu ihrem Befestigen auf dem Öffnungselement (1) bestimmt ist, wobei die Leiste (11) an ihrem hinteren Ende (11a) Mittel (20, 22; 30, 35) zum Feststellen auf dem Öffnungselement (1) aufweist, **dadurch gekennzeichnet, dass** die Feststellmittel einerseits ein Positionierorgan (20; 30) der Garnitur (10) in Bezug zu dem Öffnungselement, das zum Vorpositionieren der Leiste (11) auf dem Öffnungselement und zum Drehen der Leiste (11) um eine Rotationsachse (Y) bestimmt ist, die sich senkrecht zu der Garnitur erstreckt, und andererseits mindestens ein Organ (22; 35) zum Verriegeln der Leiste (11), das zu deren Feststellen an dem Öffnungselement (1) in Bezug zu der Rotationsachse (Y) bestimmt ist, aufweisen.

2. Garnitur nach Anspruch 1, **dadurch gekennzeichnet, dass** das Positionierorgan einen zylindrischen Schaft (20) aufweist, der sich senkrecht zu der Leiste (11) erstreckt.

3. Garnitur nach Anspruch 1 oder 2, **dadurch gekennzeichnet, dass** das Verriegelungsorgan mindestens eine elastische Lasche (22) aufweist, die auf dem Schaft (20) eingerichtet ist, wobei jede Lasche (22) ein erstes Ende (22a), das mit dem Schaft (20) fest verbunden ist, und ein zweites Ende (22b), das außen mit einem vorstehenden Rand (23) versehen ist, aufweist, wobei der Rand zum Einrasten des Verriegelungsorgans in dem Öffnungselement (1) bestimmt ist.

4. Garnitur nach Anspruch 3, **dadurch gekennzeichnet, dass** das erste Ende (22a) der Lasche (22) zwischen dem freien Ende (21b) des Schafts (20) und dem zweiten Ende (22b) der Lasche (22) liegt.

5. Garnitur nach Anspruch 1, **dadurch gekennzeichnet, dass** das Positionierorgan (30) eine im Wesentlichen rechteckige Platte (31) aufweist, die sich senkrecht zu der Leiste (11) erstreckt und zwei seitliche Ränder (33) hat, die nach unten schräge Seiten bilden.

6. Garnitur nach Anspruch 5, **dadurch gekennzeichnet, dass** das Verriegelungsorgan (35) mindestens eine elastische Pratze (36) aufweist, die sich unterhalb der Platte (31) senkrecht zu der Leiste (11) erstreckt, wobei die Pratze (36) ein erstes Ende (36a) aufweist, das fest mit der Leiste (11) verbunden ist, und ein zweites freies Ende (36b), das mit einem vorstehenden Rand (37) versehen ist, wobei der Rand zum Einrasten des Verriegelungsorgans (35) in das Öffnungselement (1) bestimmt ist.

7. Fahrzeugöffnungselement (1), insbesondere für Kraftfahrzeug, das mit einer gleitenden Scheibe (4) und einer Garnitur (10) nach einem der vorhergehenden Ansprüche ausgestattet ist, **dadurch gekennzeichnet, dass** es eine Türplatte aufweist, die einen seitlichen Ständer (5) abgrenzt, auf dem eine Öffnung (7, 8) eingerichtet ist, die mit den Feststellmitteln der Garnitur (10) auf dem Öffnungselement (1) zusammenwirkt.

8. Öffnungselement nach Anspruch 7 und einem der Ansprüche 2 bis 4, **dadurch gekennzeichnet, dass** diese Öffnung aus einem kreisförmigen Loch (7) besteht.

9. Öffnungselement nach Anspruch 7 und Anspruch 5 oder 6, **dadurch gekennzeichnet, dass** die Öffnung durch ein rechteckiges Loch (8) gebildet wird.

10. Verfahren zum Positionieren einer Garnitur (10) zum Gleiten einer Scheibe (4) auf einem Öffnungselement (1) eines Fahrzeugs, wobei das Öffnungselement nach einem der Ansprüche 7 bis 9 ausgebildet ist, **dadurch gekennzeichnet, dass** es aus den folgenden Schritten besteht:
- Einführen des Positionierorgans (20; 30) der Leiste (11) in die Öffnung (7; 8) des seitlichen Ständers (5) der Türtafel (1),
- Schwenken der Leiste (11) um das Positionierorgan (20; 30), um sie auf dem Falz (6) der Türtafel (1) einzurasten, und
- Ausüben eines Schubs auf das hintere Ende (11a) der Leiste (11) in eine Richtung senkrecht zu der Achse der Garnitur (10), um die Leiste (11) auf der Türtafel (1) durch das Verriegelungsorgan (22; 30) in der Öffnung (7; 8) zu befestigen.
